# EUROPÄISCHE PATENTANMELDUNG

(11) **EP 1 193 100 A2**
(43) Veröffentlichungstag der Anmeldung: **03.04.2002**
(21) Anmeldenummer: 01122918.4
(22) Anmeldetag: 25.09.2001
(51) Int. Cl.: B60K 7/00, B60K 17/04

(54) **Hydrostatisch-mechanischer Radantrieb**

(30) Priorität: 30.09.2000 DE 10048542
(71) Anmelder: ZF FRIEDRICHSHAFEN Aktiengesellschaft, 88038 Friedrichshafen (DE)
(72) Erfinder: Eymüller, Helmut, 88046 Friedrichshafen (DE); Schneider, Jochen, 88069 Tettnang (DE)

(57) **Zusammenfassung**

Ein hydrostatischer Radialkolbenmotor (1) treibt über eine Planetenstufe (3) eine Radnabe (7) zum Antrieb eines Rades an. Zwischen der Planetenstufe (3) und dem hydrostatischen Radialkolbenmotor (1) ist eine Radlagerung (9) angeordnet, welche die Radkraft von der Radnabe (7) auf den Nabenträger (5) überträgt. Indem die radialen Kräfte des hydrostatischen Radialkolbenmotors (1) in das innere Zentralrad (2) eingeleitet werden, wobei das innere Zentralrad (2) einerseits in seiner Verzahnung (12) und andererseits in einer radialen Lagerung (11) gelagert ist, und die axialen Kräfte des hydrostatischen Radialkolbenmotors (1) über ein Axiallager entweder in den Nabenträger (5) oder über das innere Zentralrad (2) in die Radnabe (7) eingeleitet werden, kann der Nabenträger (5) so gestaltet werden, daß die Radlagerung (9) optimal auf den Krafteinleitungspunkt der Radkraft ausgelegt werden kann.

## Beschreibung

Die Erfindung bezieht sich auf einen hydrostatisch-mechanischen Radantrieb nach der im Oberbegriff von Anspruch 1 näher definierten Art.

Hydrostatisch-mechanische Radantriebe werden häufig zum Antrieb von mobilen Baumaschinen, wie z. B. Rad- oder Kettenbaggern, verwendet. Insbesondere bei Kettenbaggern ist der Radantrieb, um ihn vor mechanischen Beschädigungen zu schützen, innerhalb der Erstreckung der Kette anzuordnen.

Die DE 196 37 570 A1 offenbart einen hydrostatisch-mechanischen Radantrieb, bei welchem ein Radialkolbenmotor ein inneres Zentralrad einer Planetenstufe antreibt, deren äußeres Zentralrad den Abtrieb bildet und deren Planetenträger drehfest mit einem Nabenträger verbunden ist. Die radialen und axialen Kräfte des hydrostatischen Radialkolbenmotors werden über ein großvolumiges Kegelrollenlager in den Nabenträgr eingeleitet. Die Radkräfte werden von der Radnabe über eine Radlagerung in den Nabenträger eingeleitet. Die Radlagerung ist zwischen dem Planetengetriebe und dem Radialkolbenmotor angeordnet. Wird der Radantrieb für den Antrieb eines Kettenbaggers verwendet, so ist der Antrieb innerhalb der Kette anzuordnen, um ihn vor Beschädigung zu schützen. Durch die Anordnung der Radlager zwischen dem Planetengetriebe und dem Radialkolbenmotor ist es bei Verwendung des Radantriebes im Kettenbagger nicht möglich, die Radkraft der Radlager mittig beaufschlagen zu lassen. Gestattet es der Bauraum nicht, den hydrostatisch-mechanischen Radantrieb im Fahrzeug so einzubauen, daß die Radkraft mittig die Radlagerung beaufschlagt, so ist es notwendig, die Radlagerung großvolumiger zu dimensionieren, was zu einer erheblichen axialen Verlängerung des hydrostatisch-mechanischen Radantriebs führt.

Der vorliegenden Erfindung liegt die Aufgabe zugrunde, einen hydrostatisch-mechanischen Radantrieb zu schaffen, welcher kompakt aufgebaut ist und bei welchem die Einleitung der Radkraft variabel gestaltet werden kann.

Die Aufgabe wird mit einem, auch die kennzeichnenden Merkmale des Hauptanspruchs aufweisenden, gattungsgemäßen hydrostatisch-mechanischen Radantrieb gelöst.

Erfindungsgemäß kann die Lagerbasis der Radlagerung vergrößert werden, indem die axialen Kräfte des hydrostatischen Radialkolbenmotors über ein Axiallager entweder direkt in den Nabenträger oder über das innere Zentralrad in einen Deckel und von dort in die Radnabe, und die radialen Kräfte des hydrostatischen Radialkolbenmotors über ein Radiallager direkt in den Nabenträger oder in das innere Zentralrad eingeleitet werden. Somit benötigt der hydrostatisch-mechanische Radantrieb kein großvolumiges Kegelrollenlager zur Aufnahme der Kräfte des hydrostatischen Radialkolbenmotors, wodurch der Nabenträger so gestaltet werden kann, daß die Radlagerung eine breitere Lagerbasis aufweist, wodurch die Radlagerung flexibler gestaltet werden kann. Somit verlängert sich die axiale Erstreckung des hydrostatisch-mechanischen Radantriebs nicht und es besteht die Möglichkeit, die Radkraft variabler einzuleiten. Die radiale Lagerung des inneren Zentralrades besteht einerseits aus der Lagerung des inneren Zentralrades über die Verzahnung in der Planetenstufe oder einem zusätzlichen Radiallager und andererseits aus der Lagerung der inneren Zentralwelle über ein Lager, welches entweder im Nabenträger oder im mit ihm verbundenen Planetenträger oder in einem Deckel, welcher mit der Radnabe in Verbindung steht, oder über das Verbindungsprofil zwischen Radialkolbenmotor und innerer Zentralwelle, wobei der Radialkolbenmotor über ein Radiallager im Nabenträger gelagert ist, angeordnet sein kann. Es besteht auch die Möglichkeit, die axialen Kräfte des hydrostatischen Radialkolbenmotors in das innere Zentralrad einzuleiten, welches dann wiederum über ein Axiallager und einen Deckel mit der Radnabe in Verbindung steht. Das innere Zentralrad kann einstückig oder mehrstükkig ausgebildet sein.
Indem der Abstand des Nabenträgers zum hydrostatischen Radialkolbenmotor verringert und dadurch der Bauraum der Radlager vergrößert wurde, wird ein kompakter hydrostatisch-mechanischer Radantrieb geschaffen, welcher variabler in den Fahrzeugen verwendet werden kann.

Weitere Merkmale sind der Figuren-Beschreibung zu entnehmen.
Es zeigen:

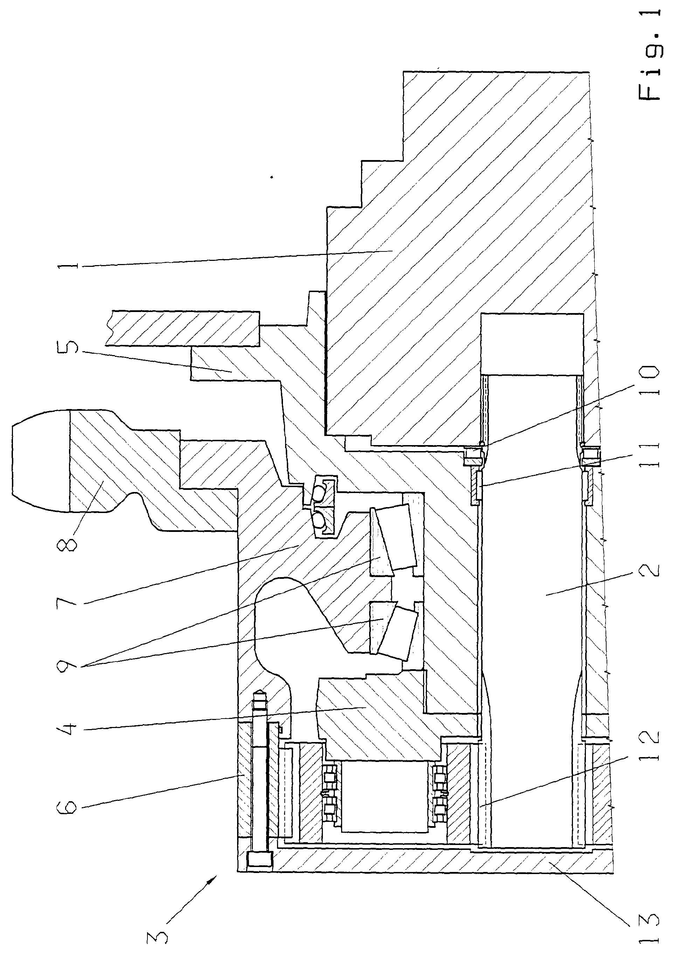

- Fig. 1: einen hydrostatisch-mechanischen Radantrieb, bei welchem die Radial- und Axialkräfte des hydrostatischen Radialkolbenmotors in den Nabenträger eingeleitet werden und

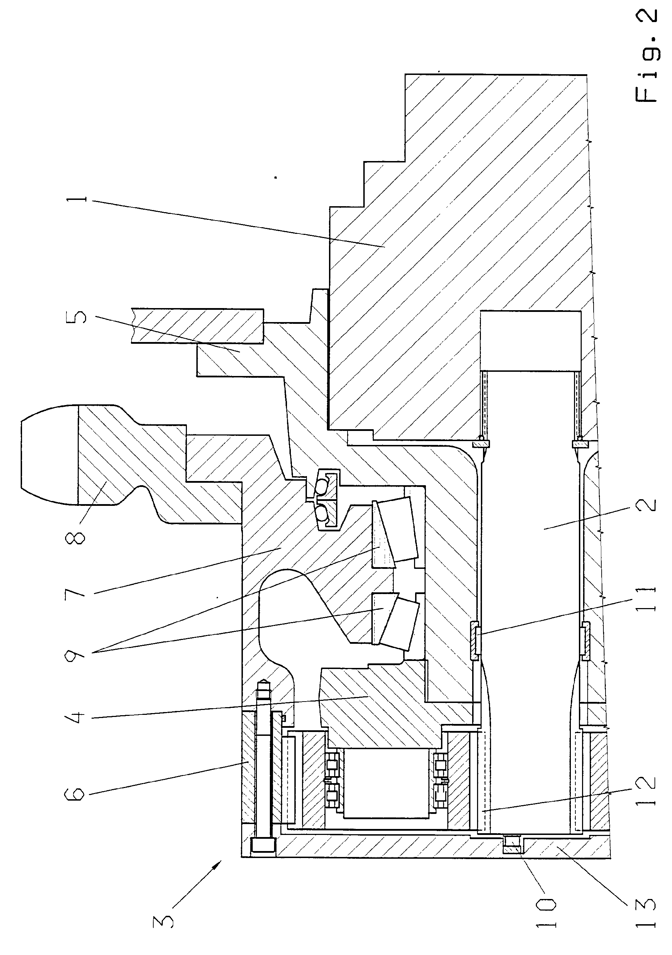

- Fig. 2: einen hydrostatisch-mechanischen Radantrieb, bei welchem die Radialkraft des hydrostatischen Radialkolbenmotors in den Nabenträger und die Axialkraft des hydrostatischen Radialkolbenmotors in die innere Zentralwelle eingeleitet werden.

### Fig. 1:

Ein hydrostatischer Radialkolbenmotor 1, wie z. B. in der EP 0 969 205 A1 beschrieben, treibt ein inneres Zentralrad 2 eines Planetengetriebes 3 an, dessen Planetenträger 4 drehfest mit dem Nabenträger 5 verbunden ist und dessen äußeres Zentralrad 6 eine Radnabe 7 antreibt, welche mit einem Kettenrad 8 drehfest verbunden ist. Die Radnabe 7 ist über eine Radlagerung 9 auf dem Nabenträger 5 gelagert. Die axialen Kräfte des hydrostatischen Radialkolbenmotors 1 werden über ein Axiallager 10 in den Nabenträger 5 eingeleitet, die radialen Kräfte des hydrostatischen Radialkolbenmotors 1 werden in das innere Zentralrad 2 eingeleitet. Das innere Zentralrad 2 ist in radialer Richtung einerseits über die Verzahnung 12 und andererseits über ein Radiallager 11 gelagert. Somit kann der Nabenträger 5 so ausgestaltet werden, daß die Radlagerung 9, je nach Krafteinleitung der Radkraft, optimal gestaltet werden kann, ohne die axiale Baulänge des hydrostatisch-mechani-schen Radantriebes zu verlängern.

### Fig. 2:

Ein hydrostatischer Radialkolbenmotor 1 treibt ein inneres Zentralrad 2 eines Planetengetriebes 3 an, dessen Planetenträger 4 drehfest mit einem Nabenträger 5 verbunden ist und dessen äußeres Zentralrad 6 den Abtrieb bildet und eine Radnabe 7 antreibt. Die Radnabe 7 treibt ein Rad oder ein Kettenrad 8 an. Die Radnabe 7 ist über eine Radlagerung 9 auf dem Nabenträger 5 gelagert. Die radialen Kräfte des hydrostatischen Radialkolbenmotors 1 werden in das innere Zentralrad 2 eingeleitet, wobei das innere Zentralrad 2 in radialer Richtung einerseits über die Verzahnung 12 und andererseits über ein Radiallager 11 gelagert ist. Die axialen Kräfte des hydrostatischen Radialkolbenmotors 1 werden in das innere Zentralrad 2 eingeleitet, wobei das innere Zentralrad 2 in axialer Richtung über ein Axiallager 10 in einem Deckel 13, welcher mit der Radnabe 7 in Verbindung steht, gelagert ist. Somit ist es möglich, die Radlagerung 9 dergestalt, auszuführen, daß die Einleitung der Radkraft variabel gestaltet werden kann, ohne daß der hydrostatisch-mechanische Radantrieb in seiner axialen Baulänge verlängert wird.
Es besteht auch die Möglichkeit, die axialen Kräfte des Radialkolbenmotors 1 in das innere Zentralrad 2 und von diesem über ein Axiallager 10 in den Nabenträger 5 und die radialen Kräfte über das innere Zentralrad 2 in die Verzahnung 12 und den Nabenträger 5 einzuleiten.

### Bezugszeichen

- 1: hydrostatischer Radialkolbenmotor
- 2: inneres Zentralrad.
- 3: Planetengetriebe
- 4: Planetenträger
- 5: Nabenträger
- 6: äußeres Zentralrad
- 7: Radnabe
- 8: Kettenrad
- 9: Radlagerung
- 10: Axiallager
- 11: Radiallager
- 12: Verzahnung
- 13: Deckel

## Patentansprüche

1. Hydrostatisch-mechanischer Radantrieb mit einem hydrostatischen Radialkolbenmotor (1), welcher ein inneres Zentralrad (2) eines Planetengetriebes (3) antreibt, mit Radlagern (9), welche eine Radnabe (7) auf einem Nabenträger (5) lagern, wobei die Radlager (9) zwischen dem Planetengetriebe (3) und dem hydrostatischen Radialkolbenmotor (1) angeordnet sind und einer Lagerung (10, 11, 12), welche die vom hydrostatischen Radialkolbenmotor (1) entstehenden axialen und radialen Kräfte aufnimmt, **dadurch gekennzeichnet, daß** die axialen Kräfte des hydrostatischen Radialkolbenmotors (1) über ein Axiallager (10) in den Nabenträger (5) einleitbar sind und die radialen Kräfte des hydrostatischen Radialkolbenmotors (1) in das gelagerte innere Zentralrad (2) einleitbar sind.

2. Hydrostatisch-mechanischer Radantrieb mit einem hydrostatischen Radialkolbenmotor (1), welcher ein inneres Zentralrad (2) eines Planetengetriebes (3) antreibt, mit Radlagern (9), welche eine Radnabe (7) auf einem Nabenträger (5) lagern, wobei die Radlager (9) zwischen dem Planetengetriebe (3) und dem hydrostatischen Radialkolbenmotor (1) angeordnet sind, und einer Lagerung (10, 11, 12), welche die vom hydrostatischen Radialkolbenmotor (1) entstehenden axialen und radialen Kräfte aufnimmt, **dadurch gekennzeichnet, daß** die axialen Kräfte des hydrostatischen Radialkolbenmotors (1) über ein inneres Zentralrad (2) in ein Axiallager (10) und von dort mittelbar in die Radnabe (7) einleitbar sind und die radialen Kräfte in das in radialer Richtung gelagerte innere Zentralrad (2) einleitbar sind.

3. Hydrostatisch-mechanischer Radantrieb nach Anspruch 1 oder 2, **dadurch gekennzeichnet, daß** das innere Zentralrad (2) in radialer Richtung einerseits über seine Verzahnung (12) und andererseits über ein Lager (11) gelagert ist.

4. Hydrostatisch-mechanischer Radantrieb nach Anspruch 2, **dadurch gekennzeichnet, daß** das Lager (11) des inneren Zentralrades (2) im Nabenträger angeordnet ist.

5. Hydrostatisch-mechanischer Radantrieb nach Anspruch 3, **dadurch gekennzeichnet, daß** das Lager (11) des inneren Zentralrades (2) mit der Radnabe (7) in Verbindung steht.

6. Hydrostatisch-mechanischer Radantrieb nach Anspruch 1, **dadurch gekennzeichnet, daß** ein äußeres Zentralrad (6) des Planetengetriebes den Abtrieb bildet.

7. Hydrostatisch-mechanischer Radantrieb nach Anspruch 1, **dadurch gekennzeichnet, daß** der Radialkolbenmotor (1) direkt im Nabenträger (5) radial gelagert ist.

8. Hydrostatisch-mechanischer Radantrieb nach Anspruch 1, **dadurch gekennzeichnet, daß** das innere Zentralrad (2) über zwei Radiallager in radialer Richtung gelagert ist.
